# EUROPÄISCHE PATENTSCHRIFT

(11) **EP 1 429 814 B1**
(45) Veröffentlichungstag und Bekanntmachung des Hinweises auf die Patenterteilung: **06.07.2005**
(21) Anmeldenummer: 02787339.7
(22) Anmeldetag: 17.09.2002
(51) Int. Cl.: A61L 24/04

(54) **KNOCHENHAFTVERMITTLER UND ADHÄSIVES SCHICHTSYSTEM SOWIE VERFAHREN ZU DEREN HERSTELLUNG**
BONE COUPLING AGENT, LAYERED ADHESIVE SYSTEM AND METHOD FOR MAKING SAID COUPLING AGENT
AGENT DE COUPLAGE POUR OS, SYSTEME ADHESIF EN COUCHE ET PROCEDE DE FABRICATION DUDIT AGENT DE COUPLAGE

(30) Priorität: 19.09.2001 DE 10146053
(43) Veröffentlichungstag der Anmeldung: 23.06.2004
(73) Patentinhaber: Coripharm GmbH & Co., 64807 Dieburg (DE)
(72) Erfinder: MARX, Rudolf, NL-6291 CX Vaals (NL); NIETHARD, Fritz, Uwe, 52076 Aachen (DE); FISCHER, Horst, 52072 Aachen (DE); WIRTZ, Dieter, Christian, 52072 Aachen (DE)
(74) Vertreter: Jostarndt, Hans-Dieter, Dr. Dipl.-Phys.
(86) Internationale Anmeldenummer: PCT/DE2002/003469
(87) Internationale Veröffentlichungsnummer: WO 2003/025077

(56) Entgegenhaltungen:
- WO-A-96/32970
- US-A- 4 222 780

## Beschreibung

Die Erfindung betrifft einen Haftvermittler, insbesondere einen Knochenhaftvermittler für die Verbindung des Knochens mit Knochenzement, ein adhäsives Schichtsystem, sowie ein Verfahren zur Herstellung des Haftvermittlers.

Beim künstlichen Gelenkersatz werden verschlissene Gelenkoberflächen durch Endoprothesen ersetzt, die in die gelenknahe Knochensubstanz eingebracht werden. Dabei werden höchste Anforderungen an die Stabilität und Festigkeit der Verbindung zwischen Implantat und Knochen gestellt, um eine möglichst langfristige Standzeit und Funktionalität der Implantate zu gewährleisten.

Der Knochen ist unter den hier wichtigen Aspekten ein "Komposit" aus Apatitkristallen, eingebettet in eine Kollagenmatrix. Dieses Komposit besteht zu 70% aus Apatitkristallen und zu 30 % aus organischen Bestandteilen (davon Kollagenmatrix 98%, Osteoblasten, Osteozyten, Osteoklasten 2%). Dabei binden die langkettigen Kollagenmoleküle extrazelluläre Flüssigkeit, was dem Knochen hydrophile Eigenschaften verleiht. Dies gilt sowohl für die kortikalen als auch spongiösen Knochenanteile, die durch ihren strukturellen Aufbau als hydrodynamisches System (Knochentubuli als flüssigkeitsgefülltes "Rohrsystem") hydrophil sind. Wegen dieser Hydrophilie ist jedoch die Knochenoberfläche gerade unter dem Aspekt der Benetzung zum Knochenzement, also dem PMMA, inkompatibel. Das hydrophobe PMMA kann diese hydrophile Oberfläche nicht benetzen. Weil Wasser als Hauptbestandteil von Blut eine höhere Adsorptionsenergie hat als das PMMA, wird das Wasser die eventuell schon an der Knochenoberfläche adsorbierten PMMA-Moleküle verdrängen oder ihre Adsorption verhindern. Wenn trotzdem eine Retention zustande kommt, dann nur über Rauheiten, in die der Knochenzement eingepresst wird.

Nach dem Stand der Technik sind einige Versuche bekannt, die Haftfähigkeit des PMMA an der Knochenoberfläche zu erhöhen.

Zu diesem Zweck ist aus dem Deutschen Ärzteblatt 96, Heft 43,29 Oktober 1999, als Ansatz bekannt, das Implantat mit einem Adhäsionsprotein zu beschichten. Dabei wird in das PMMA Eiweiß eingebunden. Dieses Verfahren erfordert jedoch sehr aufwendige chemische Prozessschritte.

Eine Alternative stellt das im selben Artikel dargestellte Verfahren dar, bei dem PMMA nicht mit natürlichem Protein, sondern mit kurzen Abschnitten des Eiweißes beschichtet wird. Die adhäsionsvermittelnden Abschnitte des Moleküls bestehen aus den drei Aminosäuren Arginin, Glycin und Asparaginsäure. Diese kurzen Abschnitte stellen eine Verbindung mit dem Protein Ingetrin an den sogenannten Integrin-Rezeptoren von Osteoblasten her.

Aus der WO 95/10990 ist bekannt, dass Prothesen mittels einer semipermeablen mikroporösen Membran beschichtet werden, die den Knochen als Verbindungsschicht berührt.

Aus der WO 96132970 sind Alkoxy-Silane mit polymerisierbaren Seitenketten bekannt, die als Haftvermittler für Metalloberflächen dienen.

Das US-Patent 4,222,780 offenbart eine Phosphinsäure, die copolymerisierbaren Füllmitteln beispielsweise für Zahnhohlräume beigemischt werden kann.

Es ist die Aufgabe der Erfindung, einen Haftvermittler als eigenständige Schicht für die Verbindung von natürlichem Knochen und Knochenzement, insbesondere PMMA, zu schaffen, der eine sehr gute und sichere Haftung herstellt. Die Komponenten des Haftvermittlers sollen nicht toxisch, für den Körper gut verträglich sein und eine sichere, belastbare Verbindung zwischen natürlichem Knochen und Prothese herstellen.

Ausgehend vom Oberbegriff der Ansprüche 1, 10, und 19 wird die Aufgabe gelöst durch die im kennzeichnenden Teil der Ansprüche 1, 10, und 19 angegebenen Merkmale.

Erfindungsgemäß wird ein Schichtsystem bzw. ein Haftvermittler, umfassend wenigstens eine oder mehrere Komponenten, zur Verfügung gestellt, der eine verbesserte Verbindung zwischen dem Knochen und dem Knochenzement, der aus PMMA oder auch BisGMA oder eines PMMA/BisGMA-Gemisches bestehen kann, bewirkt. Die Verbindung zwischen Knochen und Knochenzement wird dauerhafter und fester, beziehungsweise belastbarer. Das erfindungsgemäße Adhäsivsystem hat amphiphile Eigenschaften, um die hydrophoben Eigenschaften des Knochenzements an die hydrophilen Eigenschaften des Knochensubstrats anzugleichen.

Vorteilhafte Weiterbildungen der Erfindung sind in den Unteransprüchen angegeben.

Im Folgenden soll die Erfindung in verschiedenen Ausführungsformen beschrieben werden.

Vor der Einfügung der Prothese und des Knochenzementes ist die mit Knochenzement zu beschichtende Oberfläche (Nicht nur Femur sondern auch Pfanne!) des Knochens mit chirurgischen Instrumentarien entsprechend der Prothesengeometrie vorzubereiten. Um zusätzlich gerade in Bereichen des kortikalen Knochens die inneren Knochenkanälchen zu eröffnen und diese als retentive Zentren zu nutzen, soll der erfindungsgemäße Haftvermittler folgendermaßen angewendet werden:
1. Die Knochenkanälchen werden eröffnet, indem die durch ärztliche Bearbeitung entstandene Kollagen-Hydroxylapatit-Debris-Schicht entfernt wird.
2. Die oberste Knochenschicht wird demineralisiert und das Kollagennetzwerk wird freigelegt.

Diese Schritte 1) und 2) werden vorzugsweise durchgeführt, um den Knochen zu konditionieren. Hierzu wird ein Konditionierer eingesetzt, welcher erfindungsgemäß eine oder mehrere Säuren und vorzugsweise EDTA-Fe-Na (Ethylendiamin-tetraacetat) enthält. Dieses Gemisch oder jeder Bestandteil für sich alleine erfüllt die Bedingung, die mineralischen Bestandteile der Knochenoberfläche aufzulösen, aber die Integrität des Kollagenanteils nicht zu beeinträchtigen. Insbesondere das Eisen-Ion im EDTA-Fe-Na ist dabei geeignet, die Denaturierung des Kollagens während und nach der Demineralisation zu verhindern. Beispielhafte Säuren können zitronensäure, Maleinsäure, Phosphorsäure, Salpetersäure oder Oxalsäure sein. Der Knochen wird so oberflächlich bis zu einer Tiefe von 3-6 µm demineralisiert und die Kollagenfibrillen freigelegt.
3. Nachdem die Oberfläche nach den Schritten 1) und 2) vorzugsweise konditioniert wurde, wird ein Primer aufgetragen. Hierzu wird der vorzugsweise nach den Schritten 1) und 2) vorbehandelte Knochen mit einem in einem Lösungsmittel wie beispielsweise Wasser, Ethanol oder Aceton gelösten vorzugsweise hydrophilen Monomer oder Monomergemisch und besonders bevorzugt mit Glutaraldehyd benetzt. Diese bevorzugt fotopolymerisierbaren Monomere oder Monomergemische bleiben nach dem Verdunsten des Lösungsmittels auf dem Knochen zurück und besitzen vorzugsweise amphiphile Eigenschaften. Amphiphile Moleküle haben auf der einen Seite hydrophile Gruppen, die die Penetration der in den Schritten 1)und 2) angeätzten Knochenoberfläche erleichtern. Auf der anderen Seite können sie eine Methacrylatgruppe tragen, die in dem nachfolgenden Schritt 4) in den Bonder einpolymerisiert wird. Insbesondere nach der Polymerisation wird so eine Imprägnierung des Kollagennetzwerkes bewirkt, es wird stabilisiert und seine Kollabierung verhindert. Das Glutaraldehyd oder eine entsprechende Substanz soll die Stabilisierung der demineralisierten Kollagenmatrix durch Proteinfixierung unterstützen. Ein kollabiertes Kollagennetzwerk bietet wenig Retentionszentren für den anschließend aufzutragenden Bonder. Beispiele für solche ggf. amphiphilen Monomere sind die Verbindungen Hydroxyethylmethacrylat (HEMA), Urethan-di-methacrylat (UDMA), Glyceryl-methacrylat (GM) und 4-Methacryloxyethyltrimellit (4-META). Weiter sind andere Monomere denkbar, die entsprechende Eigenschaften und Wirkungen haben.

Besonders bevorzugt ist es, die Zusammensetzung des Primers so zu wählen, dass er selbst in die Knochentubuli eindringt und das Eindringen des in Schritt 4) aufzutragenden Bonders erleichtert. Damit wird in den freigelegten Knochentubuli die Verankerung von Resinzapfen, sogenannten Tags in den Schritten 4) und 5) vorbereitet.
4. Im folgenden Schritt wird ein Bonder aufgebracht. Hierzu wird ein Monomer aufgetragen, das in die zwischen den Kollagenfibrillen befindlichen Freiräume eindringt. Die erfindungsgemäß eingesetzten Bonder sind im Sinne der Erfindung vorzugsweise foto-polymerisierende Verbindungen. Beispielhaft können Bisphenolglycidylmethacrylat (BisGMA) und Triethylen-glycol-dimethacrylat (TEGDMA) im Gemisch oder alleine eingesetzt werden. Ebenso können Urethan-ethylen-glycol-dimethacrylat(UEDMA) oder auch Polyethylen-glycol-dimethacrylat (Poly-EGDMA) als Bonder eingesetzt werden. Jeder Bonder kann alleine oder in beliebiger Kombination mit einem oder mehreren der genannten Bonder eingesetzt werden.
5. Im letzten Schritt wird der Bonder fotopolymerisiert. Dafür kommt jede elektromagnetische Strahlung in Betracht, bei der die Komponenten Licht absorbieren, vorzugsweise sichtbares Licht oder UV-Licht, beispielsweise Licht der Wellenlängen 360, 300, 254 oder 248 nm oder im sichtbaren Bereich 400, 420, 460, 490, oder 570 nm. Die aufgeführten Wellenlängen sind beispielhaft und können auch andere Werte annehmen. Das nach der Fotopolymerisation entstehende Netzwerk aus Kollagen und Bonder mit den Kollagenfibrillen als Matrix umschlossen und eingebettet in den Bonder sorgt für eine mikromechanische Retention zur Knochenoberfläche. Der vom Bonder infiltrierte Oberflächenanteil wird Hybridschicht genannt. Da der Bonder mit dem Primer kopolymerisiert, bildet sich ein fester und belastbarer Interlayer aus, an den der Knochenzement bestehend aus PMMA oder BisGMA angekoppelt werden kann, da Bonder und Knochenzement chemisch kompatibel sind.

In das so auf eine beständige Fixierung zum Knochen vorbereitete System aus noch einzubringender Knochenzementmasse und Hybridschicht kann nunmehr die Endoprothesenkomponente, die beim künstlichen Hüftgelenkersatz am Acetabulum aus Polyethylen und am Femur in der Regel aus Metall, wie z. B. einer CoCr- oder Ti-Legierung besteht, eingebracht werden. Keramikimplantate oder mit Keramik beschichtete Metallimplantate oder Keramikimplantate mit Metallkern sind auch denkbar, ferner ebenso Implantate aus faserverstärktem Kunststoff.

Der Primer und der Bonder bilden das erfindungsgemäße adhäsive Schichtsystem aus, welches den Haftvermittler darstellt. Der Konditionierer dient der Vorbehandlung, greift aber funktionell in die Wirkungsweise des Haftvermittlers ein, da die Haftung dann am besten ist, wenn die Knochenoberfläche demineralisiert und die Kollagenfibrillen freigelegt wurden. Im weiteren Sinne ist der Konditionierer daher dem Haftvermittlersystem zugehörig.

Das erfindungsgemäße Haftvermittlersystem kann in unterschiedlicher Weise zur Verfügung gestellt werden.

In einer Ausführungsform befinden sich Konditionierer, Primer und Bonder in einem Stoffgemisch, welches als Haftvermittler für den Knochenzement dient, in einem Schritt auf den Knochen aufzutragen ist und fotochemisch polymerisiert wird. Diese Ausführungsform ist besonders praxisgerecht, da alle Komponenten gleichzeitig aufgetragen werden können, was für chirurgische Eingriffe von besonderem Vorteil ist. Dem Patienten müssen daher keine unnötig verlängerten Operations- und somit Narkosezeiten zugemutet werden.

In einem derartigen Gemisch befinden sich mindestens eine der in Betracht kommenden Säuren und/oder EDTA gemäß den Schritten 1) und 2), mindestens eine Komponente der in Betracht kommenden Primer-Verbindungen gemäß Schritt 3) sowie mindestens eine der in Betracht kommenden Komponenten aus der Gruppe der Bonder-Verbindungen der Schritte 4) und 5) .

In einer alternativen Ausführungsform wird der Konditionierer zunächst einzeln auf die Knochenoberfläche aufgebracht und anschließend das Gemisch aus Primer und Bonder in allen möglichen Unterkombinationen aufgebracht und vorzugsweise fotopolymerisert.

In einer ebenfalls bevorzugten Ausführungsform wird der Haftvermittler als Kollektiv räumlich nebeneinander existierender Komponenten charakterisiert, welche in funktionellem Zusammenhang stehen und somit eine Wirkungseinheit darstellen. Keine der Einzelkomponenten alleine bewirkt das optimale erfindungsgemäß erwünschte Ergebnis, jedoch führt das nebeneinander vorliegende Kollektiv von Komponenten bei zeitlich aufeinander folgender Anwendung zum Wirkprinzip des Haftvermittlers. Das räumlich nebeneinander vorliegende Stoffkollektiv aus Primer und Bonder sowie aus Konditionierer, Primer und Bonder soll daher in seinen möglichen Unterkombinationen Bestandteil der Erfindung sein.

Diese Unterkombinationen sind beispielsweise:

Für den Konditionierer: Zitronensäure, Maleinsäure, Phosphorsäure,Salpetersäure, Oxalsäure und EDTA alleine oder eine Mischung aus beliebig vielen Komponenten davon.

Für den Primer: HEMA, UDMA, GM und 4-META alleine oder eine Mischung beliebig vieler Komponenten davon mit oder ohne Glutaraldehyd.

Für den Bonder: BisGMA, TEGDMA, Poly-EGDMA und UEDMA alleine oder eine Mischung beliebig vieler Komponenten davon.

Die räumlich voneinander getrennten Komponenten Primer und Bonder, sowie Konditionierer, Primer und Bonder bilden in ihren jeweiligen Unterkombinationen innerhalb der Komponenten Konditionierer, Primer oder Bonder, ein Stoffkollektiv, welches funktionell zusammengehörig ist und von denen keine Komponente, Konditionierer, Primer oder Bonder alleine die gewünschte optimale erfindungsgemäße Wirkung der Haftvermittlung erzielt. Das räumlich getrennte nebeneinander Vorliegen der Komponenten Primer und Bonder sowie Konditionierer, Primer und Bonder ist daher ebenfalls Gegenstand der Erfindung und stellt eine weitere Ausführungsform des Haftvermittlers dar.

Die nebeneinander vorliegenden Komponenten sowie das nacheinander Anwenden der Komponenten sind im Hinblick auf die optimale Haftvermittlung zwischen Knochen und Knochenzement bevorzugt. Somit kommt dieser Ausführungsform auch eine eigenständige Wirkung zu, nämlich die gegenüber dem Stoffgemisch gegebenen noch besseren Haftvermittlungseigenschaften.

Der erfindungsgemäße Haftvermittler kann mit Hilfe eines geeigneten Applikators auf den Knochen aufgetragen werden. Er ermöglicht wahlweise den Auftrag der einzelnen Komponenten nacheinander oder des Gemisches der Einzelkomponenten und deren fotochemische Aushärtung.

Weiterhin ist der Gegenstand der Erfindung ein Schichtsystem, welches eine Schichtabfolge von A Primer und B Bonder darstellt und adhäsive Eigenschaften besitzt. Dabei ist der Primer HEMA, UDMA, GM und 4-META alleine oder eine Mischung beliebig vieler Komponenten davon jeweils mit oder ohne Glutaraldehyd und der Bonder BisGMA, TEGDMA, Poly-EGDMA und UEDMA alleine oder eine Mischung beliebig vieler Komponenten davon in ihrer Schichtabfolge und in einer ausgehärteten Schicht Gegenstand der Erfindung.

Erfindungsgemäß kann das Haftvermittlersystem hergestellt werden, indem die einzelnen Komponenten Primer und Bonder oder Konditionierer, Primer und Bonder räumlich nebeneinander bereitgestellt werden. Dazu können auch die jeweiligen Unterkombinationen der Komponenten kombiniert werden.

In einem anderen Herstellungsverfahren werden die Primer und Bonder in ihren jeweiligen möglichen Unterkombinationen miteinander gemischt.

Ein weiteres Herstellungsverfahren ist die Mischung von Konditionierer, Primer und Bonder, wobei die einzelnen Komponenten ihrerseits einzeln oder als Unterkombination der dafür in Frage kommenden Komponenten vorliegen können.

## Patentansprüche

1. Knochenhaftvermittler,
**dadurch gekennzeichnet,**
**dass** er einen Primer und einen Bonder umfasst, wobei der Primer ein fotopolymerisierbares Monomer oder Monomergemisch ist, welches amphiphile Eigenschaften besitzt und der Bonder eine fotopolymerisierbare Verbindung oder ein Gemisch aus fotopolymerisierbaren Verbindungen ist.

2. Knochenhaftvermittler nach Anspruch 1,
**dadurch gekennzeichnet,**
**dass** der Primer mindestens eine Komponente aus der Gruppe HEMA, UDMA, GM, 4-META ist.

3. Knochenhaftvermittler nach Anspruch 1 oder 2,
**dadurch gekennzeichnet,**
**dass** der Primer Glutaraldehyd enthält.

4. Knochenhaftvermittler nach einem der Ansprüche 1 bis 3,
**dadurch gekennzeichnet,**
**dass** der Bonder mindestens eine Komponente aus der Gruppe UEDMA, BisGMA, TEGMA und Poly-EGDMA ist.

5. Knochenhaftermittler nach einem der Ansprüche 1 bis 4,
**dadurch gekennzeichnet,**
**dass** er einen Konditionierer enthält.

6. Knöchenhaftvermittler nach Anspruch 5,
**dadurch gekennzeichnet,**
**dass** der Konditionierer eine Säure ist.

7. Knochenhaftvermittler nach Anspruch 6
**dadurch gekennzeichnet,**
**dass** die Säure mineralische Bestandteile der Knochenoberfläche auflösen kann, ohne die Integrität des Kollagenanteils zu beeinträchtigen.

8. Knochenhaftvermittler nach einem der Ansprüche 6 oder 7
**dadurch gekennzeichnet,**
**dass** die Säure mindestens eine Komponente aus der Gruppe Zitronensäure, Maleinsäure, Phosphorsäure, Salpetersäure und Oxalsäure ist.

9. Knochenhaftvermittler nach einem der Ansprüche 6 bis 8,
**dadurch gekennzeichnet,**
**dass** er EDTA enthält.

10. Kit zur Herstellung eines Knochenhaftvermittlers,
**dadurch gekennzeichnet,**
**dass** er als zur zeitlich getrennten Anwendung räumlich voneinander getrennte Komponenten einen Primer und einen Bonder umfasst, wobei der Primer ein fotopolymerisierbares Monomer oder Monomerengemisch ist, welches amphiphile Eigenschaften besitzt und der Bonder eine fotopolymerisierbare Verbindung oder ein Gemisch aus fotopolymerisierbaren Verbindungen ist.

11. Knochenhaftvermittler nach Anspruch 10,
**dadurch gekennzeichnet,**
**dass** der Primer Glutaraldehyd enthält.

12. Knochenhaftvermittler nach einem der Ansprüche 10 bis 11
**dadurch gekennzeichnet,**
**dass** der Bonder mindestens eine Komponente aus der Gruppe UEDMA, BisGMA, TEGMA und Poly-EGDMA ist.

13. Knochenhaftvermittler nach einem der Ansprüche 10 bis 12,
**dadurch gekennzeichnet,**
**dass** ihm ein Konditionierer zugehört, welcher entweder räumlich getrennt oder im Gemisch mit dem Primer vorliegt.

14. Knochenhaftvermittler nach Anspruch 13
**dadurch gekennzeichnet,**
**dass** der Konditionierer eine Säure ist.

15. Knochenhaftvermittler nach Anspruch 14
**dadurch gekennzeichnet,**
**dass** die Säure mineralische Bestandteile der Knochenoberfläche auflösen kann, ohne die Integrität des Kollagenanteils zu beeinträchtigen.

16. Knochenhaftvermittler nach Anspruch 14 oder 15
**dadurch gekennzeichnet,**
**dass** die Säure mindestens eine Komponente aus der Gruppe Zitronensäure, Maleinsäure, Phosphorsäure, Salpetersäure und Oxalsäure ist.

17. Knochenhaftvermittler nach einem der Ansprüche 14 bis 16
**dadurch gekennzeichnet,**
**dass** der Konditionierer EDTA enthält.

18. Knochenhaftvermitteler nach einem der Ansprüche 1-4, umfassend zwei Schichten,
**dadurch gekennzeichnet,**
**dass** eine Schicht A aus einem Primer besteht und eine zweite Schicht B aus einem Bonder besteht.

19. Verfahren zur Herstellung eines Knochenhaftvermittlers,
**dadurch gekennzeichnet,**
**dass** ein Primer und ein Bonder nach einem der Ansprüche 1 bis 4 gemischt werden.

20. Verfahren nach Anspruch 19,
**dadurch gekennzeichnet,**
**dass** ein Konditionierer nach einem der Ansprüche 5 bis 9 dem Gemisch nach Anspruch 19 beigefügt wird.

## Claims

1. A bone adhesive,
**characterized in that**
it comprises a primer and a bonder, whereby the primer is a photopolymerizable monomer or monomer mixture having amphiphilic properties and the bonder is a photopolymerizable compound or a mixture of photopolymerizable compounds.

2. The bone adhesive according to Claim 1,
**characterized in that**
the primer is at least one component from the group comprising HEMA, UDMA, GM, 4-META.

3. The bone adhesive according to Claim 1 or 2,
**characterized in that**
the primer contains glutaraldehyde.

4. The bone adhesive according to one of Claims 1 to 3,
**characterized in that**
the bonder is at least one component from the group comprising UEDMA, bisGMA, TEGMA and poly-EGDMA.

5. The bone adhesive according to one of Claims 1 to 4,
**characterized in that**
it contains a conditioner.

6. The bone adhesive according to Claim 5,
**characterized in that**
the conditioner is an acid.

7. The bone adhesive according to Claim 6,
**characterized in that**
the acid can dissolve mineral constituents of the bone surface without compromising the integrity of the collagen component.

8. The bone adhesive according to one of Claims 6 or 7,
**characterized in that**
the acid is at least one component from the group comprising citric acid, maleic acid, phosphoric acid, nitric acid and oxalic acid.

9. The bone adhesive according to one of Claims 6 to 8,
**characterized in that**
it contains EDTA.

10. A kit for producing a bone adhesive,
**characterized in that**
it comprises a primer and a bonder as physically separated components for application at different times, whereby the primer is a photopolymerizable monomer or monomer mixture having amphiphilic properties and the bonder is a photopolymerizable compound or a mixture of photopolymerizable compounds.

11. The bone adhesive according to Claim 10,
**characterized in that**
the primer contains glutaraldehyde.

12. The bone adhesive according to one of Claims 10 to 11,
**characterized in that**
the bonder is at least one component from the group comprising UEDMA, bisGMA, TEGMA and poly-EGDMA.

13. The bone adhesive according to one of Claims 10 to 12,
**characterized in that**
it contains a conditioner that is present either physically separated or else in a mixture with the primer.

14. The bone adhesive according to Claim 13,
**characterized in that**
the conditioner is an acid.

15. The bone adhesive according to Claim 14,
**characterized in that**
the acid can dissolve mineral constituents of the bone surface without compromising the integrity of the collagen component.

16. The bone adhesive according to Claim 14 or 15,
**characterized in that**
the acid is at least one component from the group comprising citric acid, maleic acid, phosphoric acid, nitric acid and oxalic acid.

17. The bone adhesive according to one of Claims 14 to 16,
**characterized in that**
the conditioner contains EDTA.

18. The bone adhesive according to one of Claims 1 to 4, comprising two layers,
**characterized in that**
a layer A consists of a primer and a second layer B consists of a bonder.

19. A method for the production of a bone adhesive,
**characterized in that**
a primer and a bonder according to one of Claims 1 to 4 are mixed.

20. The method according to Claim 19,
**characterized in that**
a conditioner according to one of Claims 5 to 9 is added to the mixture according to Claim 19.

## Revendications

1. Un agent adhésif d'os,
**caractérisé en ce que,**
il comporte une couche de fond et un bonder, tandis que la couche de fond est un monomère photopolymérisable ou un mélange de monomère photopolymérisable, qui possède des attributs amphiphiles et le bonder est une combinaison photopolymérisable ou un mélange des combinaisons photopolymérisables.

2. Un agent adhésif d'os selon la revendication 1,
**caractérisé en ce que**
la couche de fond est au moins un composant de la classe HEMA, UDMA, GM, 4-META.

3. Un agent adhésif d'os selon la revendication 1 ou 2,
**caractérisé en ce que**
la couche de fond contient de l'aldéhyde glutarique.

4. Un agent adhésif d'os selon une des revendications 1 à 3,
**caractérisé en ce que**
le bonder est au moins un composant de la classe UEDMA, BisGMA, TEGMA et Poly-EGDMA.

5. Un agent adhésif d'os selon une des revendications 1 à 4,
**caractérisé en ce que**
il contient un conditionneur.

6. Un agent adhésif d'os selon la revendication 5,
**caractérisé en ce que**
le conditionneur est un acide.

7. Un agent adhésif d'os selon la revendication 6,
**caractérisé en ce que**
l'acide peut dissoudre des composants minéraux de la surface de l'os sans attenter à l'intégrité de la part de collagène.

8. Un agent adhésif d'os selon une des revendications 6 ou 7,
**caractérisé en ce que**
l'acide est au moins un composant de la classe de l'acide citrique, de l'acide maléique, de l'acide phosphorique, de l'acide nitrique et de l'acide oxalique.

9. Un agent adhésif d'os selon une des revendications 6 à 8,
**caractérisé en ce que**
il contient de l'EDTA.

10. Un équipement pour la production d'un agent adhésif d'os,
**caractérisé en ce que**
il contient comme composants étant séparés spatialement l'un à l'autre pour l'application étant séparée temporairement une couche de fond et un bonder, laquelle couche de fond est un monomère photopolymérisable ou un mélange des monomères photopolymérisable, qui possède des attributs amphiphiles et lequel bonder est une combinaison photopolymérisable ou un mélange des combinaisons photopolymérisables.

11. Un agent adhésif d'os selon la revendication 10,
**caractérisé en ce que**
la couche de fond contient de l'aldéhyde glutarique.

12. Un agent adhésif d'os selon une des revendications 10 à 11,
**caractérisé en ce que**
le bonder est au moins un composant de la classe de UEDMA, BisGMA, TEGMA et Poly-EGDMA.

13. Un agent adhésif d'os selon une des revendications 10 à 12,
**caractérisé en ce que**
un conditionneur lui appartient qui est présent ou séparé d'une façon spatiale ou dans le mélange avec la couche de fond.

14. Un agent adhésif d'os selon la revendication 13,
**caractérisé en ce que**
le conditionneur est un acide.

15. Un agent adhésif d'os selon la revendication 14,
**caractérisé en ce que**
l'acide peut dissoudre des composants de la surface de l'os, sans altérer l'intégrité de la part de collagène.

16. Un agent adhésif d'os selon la revendication 14 ou 15,
**caractérisé en ce que**
que l'acide est au moins un composant de la classe de l'acide citrique, de l'acide maléique, de l'acide phosphorique, de l'acide nitrique et de l'acide oxalique.

17. Un agent adhésif d'os selon une des revendications 14 à 16,
**caractérisé en ce que**
le conditionneur contient de l'EDTA.

18. Un agent adhésif d'os selon une des revendications 1 à 4, comportant deux couches,
**caractérisé en ce que** une couche A se compose d'une couche de fond.

19. Un procédé pour la production d'un agent adhésif d'os,
**caractérisé en ce que**
une couche de fond et un bonder sont mélangés selon une des revendications 1 à 4.

20. Un procédé selon la revendication 19,
**caractérisé en ce que**
un conditionneur selon une des revendications 5 à 9 est ajouté au mélange selon la revendication 19.
